# EUROPÄISCHE PATENTANMELDUNG

(11) **EP 0 541 141 A1**
(43) Veröffentlichungstag der Anmeldung: **12.05.1993**
(21) Anmeldenummer: 92203066.3
(22) Anmeldetag: 06.10.1992
(51) Int. Cl.: H04N 5/238, H04N 5/225

(54) **Videokamera mit mindestens einem Halbleiter-Bildsensor und einer umlaufenden Sektorblende**

(30) Priorität: 07.10.1991 DE 4133164
(71) Anmelder: BTS BROADCAST TELEVISION SYSTEMS GMBH, D-64347 Griesheim (DE); Philips Electronics N.V., 5621 BA Eindhoven (NL)
(72) Erfinder: De Rooij, Jacobus Adrianus Gerardus, NL-4714 BX Sprundel (NL)
(74) Vertreter: von Laue, Hanns-Ulrich, Dipl.-Ing.

(57) **Zusammenfassung**

Bei einer Videokamera mit mindestens einem Halbleiter-Bildsensor (4) und einer im Strahlengang des Halbleiter-Bildsensors angeordneten umlaufenden Sektorblende (5), wobei die lichtabhängige Ladungsintegration im Halbleiter-Bildsensor durch Zuführung eines Steuersignals (SE) freigegeben wird, weist die Sektorblende mehrere verschieden große lichtdurchlässige Sektoren (5') auf. Die Ladungsintegration wird freigegeben, bevor ein ausgewählter lichtdurchlässiger Sektor in den Strahlengang eintritt.

## Beschreibung

Die Erfindung geht aus von einer Videokamera nach der Gattung des Hauptanspruchs.

Bei Videokameras mit Halbleiter-Bildsensoren vom Ladungsübertragungstyp wird die lichtempfindliche Fläche während der Übertragung der Ladungen in einen Speicherteil des Bildsensors mit Hilfe einer umlaufenden Sektorblende abgedunkelt, um eine Störung der Ladungsübertragung zu vermeiden. Die umlaufende Sektorblende dient ferner zu einer Verkürzung der Belichtungszeit, um bei der Aufnahme von schnell bewegten Objekten eine Schärfeverbesserung zu erzielen
Bei den üblichen Halbleiter-Bildsensoren wird nach der Ladungsübertragung der folgende Integrationsvorgang mit Hilfe eines Steuersignals freigegeben. Eine Ladungsintegration entsprechend dem jeweiligen Lichteinfall ist somit nur bei Vorhandensein dieses Steuersignals und bei einer Freigabe des Lichts durch die Sektorblende möglich. Dieses wird bei bekannten Videokameras zu einer Einstellung verschieden langer Belichtungszeiten ausgenutzt. Dazu wird mit Hilfe einer geeigneten Regelschaltung die Phasenlage der Sektorblende derart geregelt, daß die Sektorblende die Belichtung bereits freigegeben hat, wenn mit Hilfe des Steuersignals der Integrationsvorgang gestartet wird.

Das Ende der Integration erfolgt dann durch die Bewegung der Sektorblende. Da die Kante zwischen einem lichtdurchlässigen und einem nichtlichtdurchlässigen Sektor der Blende eine endliche Zeit benötigt, um von dem oberen Rand bis zum unteren Rand des Bildes zu gelangen, erfolgt am unteren Rand des Bildes eine längere Belichtung als am oberen Rand. Dieses führt zu einem Amplitudenfehler des Videosignals - auch Shading genannt.

Aufgabe der vorliegenden Erfindung ist es, bei einer Videokamera mit mindestens einem Halbleiter-Bildsensor und einer umlaufenden Sektorblende verschiedene Belichtungszeiten zu ermöglichen, ohne daß die obengenannten Amplitudenfehler auftreten.

Diese Aufgabe wird mit den im Kennzeichen des Hauptanspruchs genannten Merkmalen in vorteilhafter Weise gelöst. Dazu wird gegenüber bekannten Videokameras kein zusätzlicher Aufwand benötigt. Es ist lediglich eine andere Gestaltung der Sektorblende und der zugehörigen Regelschaltung erforderlich.

Die Erfindung kann bei einer Videokamera mit einem Halbleiter-Bildsensor angewendet werden, der entweder für eine monochrome als auch für eine farbige Aufnahme ausgelegt ist. Ferner eignet sich die Erfindung für Farbvideokameras mit mehreren Halbleiter-Bildsensoren, wobei zwischen der Sektorblende und den Halbleiter-Bildsensoren ein Strahlenteiler angeordnet ist.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung eines Ausführungsbeispiels der Erfindung,
- Fig. 2: Zeitdiagramme zur Erläuterung des Ausführungsbeispiels gemäß Fig. 1,
- Fig. 3: die zeitliche Darstellung einer Ladungsintegration bei einer bekannten Videokamera,
- Fig. 4: die zeitliche Darstellung einer Ladungsintegration bei einer erfindungsgemäßen Videokamera,
- Fig. 5: ein Ausführungsbeispiel für eine Sektorblende bei einer erfindungsgemäßen Videokamera und
- Fig. 6: ein weiteres Ausführungsbeispiel für eine Sektorblende.

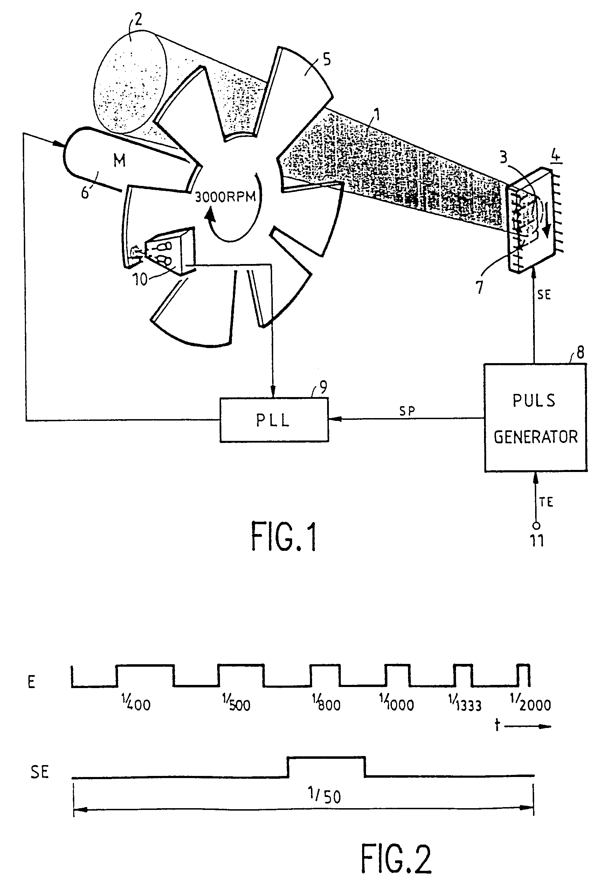

Gleiche Teile sind in den Figuren mit gleichen Bezugszeichen versehen. In Fig. 1 sind nur die Teile einer erfindungsgemäßen Videokamera dargestellt, die zum Verständnis der Erfindung erforderlich sind.

In dem Strahlengang 1 zwischen einem Objektiv 2 und der lichtempfindlichen Fläche 3 eines Halbleiter-Bildsensors 4 ist eine umlaufende Sektorblende 5 angeordnet. Die Sektorblende weist verschieden große lichtdurchlässige Sektoren auf. Sie wird von einem Motor 6 mit 3000 Umdrehungen pro Minute, das heißt, mit 50 Umdrehungen pro Sekunde angetrieben. Innerhalb einer Halbbildperiode von 1/50tel Sekunde wird dadurch die lichtempfindliche Fläche 3 nacheinander mit den in Fig. 2, Zeile E angegebenen Zeiten belichtet. Je nach Erfodernissen im einzelnen können diese Zeiten auch anders gewählt werden. Ferner ist eine Anpassung an Fernsehsysteme mit einer Vertikalfrequenz von 60 Hz durch eine entsprechend höhere Umdrehungszahl der Sektorblende 5 möglich.

Der Halbleiter-Bildsensor 4 weist außer dem lichtempfindlichen Bereich 3 einen Speicherbereich 7 auf, in welchen die durch Belichtung der einzelnen Bildelemente entstandenen Ladungen nach erfolgter Belichtung übertragen werden. Aus dem Speicherbereich 7 werden die den Ladungen entsprechenden Videosignale in an sich bekannter Weise ausgelesen, was in Fig. 1 nicht gezeigt ist. Der Übersichtlichkeit halber ist in Fig. 1 von den vielen zum Betrieb des Halbleiter-Bildsensors 4 erforderlichen Signalen nur ein Steuersignal SE dargestellt, welches die Ladungsintegration im lichtempfindlichen Bereich 3 freigibt. Dieses Signal wird in einem Pulsgenerator 8 erzeugt, der ferner einen Synchronimpuls SP an eine PLL-Schaltung 9 zur Synchronisierung der Sektorblende 5 abgibt. In der PLL-Schaltung 9 wird das Ausgangssignal eines Sensors 10 bezüglich der Phasenlage mit dem Synchronimpuls SP verglichen und daraus eine Stellgröße für den Motor 6 gewonnen. Damit wird eine Verkopplung der Phasenlage der Sektorblende 5 mit dem Synchronimpuls SP bewirkt.

Der Impulsgenerator 8 enthält eine Einrichtung zur Verstellung der Phasenlage zwischen dem Steuersignal SE und dem Synchronimpuls SP in Abhängigkeit von einer bei 11 eingegebenen Vorgabe für die Belichtungszeit TE. Damit kann die Zeit, während der die Ladungsintegration freigegeben ist, gegenüber den einzelnen Belichtungszeiten E derart verschoben werden, daß die jeweils gewünschte Belichtungszeit in die Dauer des Impulses SE fällt. Im Beispiel gemäß Fig. 2 ist dieses eine Belichtungszeit von 1/800 s.

Zur besseren Lichtausbeute kann die Belichtungszeit auch über die Dauer einer der in Fig. 2 gezeigten Zeiten hinaus verlängert werden. Dazu wird der Impuls SE derart verlängert, daß er mehrere, gegebenenfalls sogar alle, durch die Blende bedingte Belichtungszeiten umfaßt.

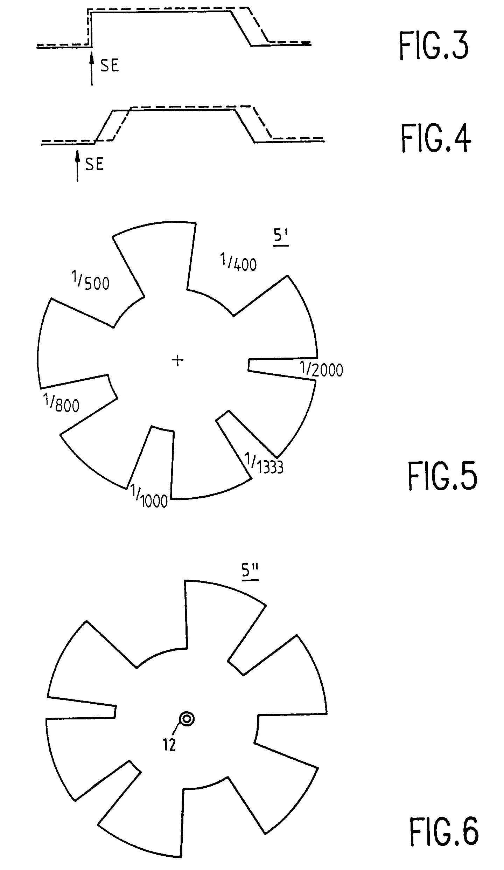

Im folgenden wird anhand der Figuren 3 und 4 der Vorteil der erfindungsgemäßen Videokamera in bezug auf das Shading erläutert. Dazu ist jeweils der zeitliche Ablauf der Belichtung bzw. der Ladungsintegration in Fig. 3 bei einer bekannten Videokamera und in Fig. 4 bei der erfindungsgemäßen Videokamera dargestellt. Die gestrichelte Linie gilt für den unteren Bildrand, während sich die durchgezogene Linie auf den oberen Bildrand bezieht.

Bei der bekannten Videokamera ist der Strahlengang bereits freigegeben, wenn die Vorderflanke des Steuersignals SE (durch einen Pfeil gekennzeichnet) auftritt. Da dieses Signal für alle Bildelemente gleichzeitig wirksam ist, beginnt zu diesem Zeitpunkt sowohl am oberen als auch am unteren Rand die Ladungsintegration in Abhängigkeit von dem jeweils einfallenden Licht. Durch die umlaufende Sektorblende wird jedoch der obere Rand früher abgedunkelt als der untere Rand. Dadurch ist die effektive Belichtungszeit, also die Zeit der Ladungsintegration, am unteren Bildrand größer als am oberen Bildrand. Eine Veränderung der Belichtungszeit ist durch eine Änderung der Phasenlage zwischen dem Steuersignal SE und der Sektorblende möglich.

Bei der erfindungsgemäßen Videokamera tritt die Vorderflanke des Steuersignals SE auf, bevor die Sektorblende die Belichtung zunächst am oberen Bildrand und dann am unteren Bildrand freigibt. Das Ende der Ladungsintegration erfolgt dann wieder zunächst für den oberen und danach für den unteren Rand. Die Integrationszeiten sind zwar zeitlich gegeneinander versetzt, jedoch gleichlang. Dabei ist die Belichtungszeit lediglich durch die Größe des lichtdurchlässigen Sektors bestimmt. Bei der erfindungsgemäßen Videokamera sind daher mehrere verschieden große lichtdurchlässige Sektoren vorgesehen, die durch eine geeignete stufenweise Phasenverschiebung wahlweise aktiviert werden können.

Fig. 5 zeigt eine Sektorblende 5' mit sechs lichtdurchlässigen Sektoren, die der Größe nach geordnet sind und bei einer Umdrehungszahl von 3000 Umdrehungen pro Minute Belichtungszeiten von 1/400, 1/500, 1/800, 1/1000, 1/1333 und 1/2000 Sekunde ergeben.

Die Sektorblende 5'' nach Fig. 6 weist die gleichen lichtdurchlässigen Sektoren wie die Sektorblende 5' nach Fig. 5 auf, sie sind jedoch bezüglich ihrer Reihenfolge und ihres Abstandes untereinander derart geordnet, daß der Schwerpunkt der Sektorblende 5'' nach Fig. 6 mit dem Drehpunkt 12 übereinstimmt. Damit werden Vibrationen bzw. zusätzliche Mittel zur Verhinderung der Unwucht vermieden.

## Patentansprüche

1. Videokamera mit mindestens einem Halbleiter-Bildsensor und einer im Strahlengang des Halbleiter-Bildsensors angeordneten umlaufenden Sektorblende, wobei die lichtabhängige Ladungsintegration im Halbleiter-Bildsensor durch Zuführung eines Steuersignals freigegeben wird, dadurch gekennzeichnet, daß die Sektorblende (5) mehrere verschieden große lichtdurchlässige Sektoren aufweist und daß die Ladungsintegration freigegeben wird, bevor ein ausgewählter lichtdurchlässiger Sektor in den Strahlengang (1) eintritt.

2. Videokamera nach Anspruch 1, dadurch gekennzeichnet, daß eine Regelschaltung (8, 9) für eine Antriebseinrichtung (6) der Sektorblende (5) mehrere auswählbare Phasenlagen der Sektorblende (5) in bezug auf das Steuersignal (SE) ermöglicht.

3. Videokamera nach Anspruch 1, dadurch gekennzeichnet, daß die lichtdurchlässigen Sektoren bezüglich ihrer Größe und ihres Abstandes voneinander derart verteilt sind, daß der Schwerpunkt der Sektorblende (5'') mit dem Drehpunkt (12) übereinstimmt.

4. Videokamera nach Anspruch 3, dadurch gekennzeichnet, daß die Sektorblende (5', 5'') sechs lichtdurchlässige Sektoren aufweist.

5. Videokamera nach Anspruch 1, dadurch gekennzeichnet, daß die Ladungsintegration während der Belichtung durch einen oder mehrere wählbare lichtdurchlässige Sektoren erfolgt.
